# EUROPÄISCHE PATENTSCHRIFT

(11) **EP 3 807 970 B1**
(45) Veröffentlichungstag und Bekanntmachung des Hinweises auf die Patenterteilung: **08.10.2025**
(21) Anmeldenummer: 19766183.8
(22) Anmeldetag: 20.08.2019
(51) Int. Cl.: H02J 3/06

(54) **VERFAHREN ZUM STEUERN EINES AUSTAUSCHS VON ENERGIE IN EINEM ENERGIESYSTEM; STEUERUNGSZENTRALE; ENERGIESYSTEM; COMPUTERPROGRAMM SOWIE SPEICHERMEDIUM**
METHOD FOR CONTROLLING AN EXCHANGE OF ENERGY IN AN ENERGY SYSTEM; CONTROL CENTRE; ENERGY SYSTEM; COMPUTER PROGRAM; AND STORAGE MEDIUM
PROCÉDÉ DE COMMANDE D'UN ÉCHANGE D'ÉNERGIE DANS UN SYSTÈME ÉNERGÉTIQUE ; CENTRALE DE COMMANDE ; SYSTÈME ÉNERGÉTIQUE ; PROGRAMME INFORMATIQUE ET SUPPORT D'ENREGISTREMENT

(30) Priorität: 30.08.2018 DE 102018214717
(43) Veröffentlichungstag der Anmeldung: 21.04.2021
(73) Patentinhaber: Siemens Aktiengesellschaft, 80333 München (DE)
(72) Erfinder: AMTHOR, Arvid, 98631 Grabfeld OT Nordheim (DE); BAUMGÄRTNER, Thomas, 91056 Erlangen (DE); SCHRECK, Sebastian, 90439 Nürnberg (DE); THIEM, Sebastian, 91413 Neustadt an der Aisch (DE); WAGNER, Lisa, 90475 Nürnberg (DE)
(74) Vertreter: Siemens Patent Attorneys
(86) Internationale Anmeldenummer: PCT/EP2019/072202
(87) Internationale Veröffentlichungsnummer: WO 2020/043542

(56) Entgegenhaltungen:
- EP-A2- 1 202 425
- DE-A1- 102012 221 291
- HOMMELBERG M P F ET AL: "Distributed Control Concepts using Multi-Agent technology and Automatic Markets: An indispensable feature of smart power grids", POWER ENGINEERING SOCIETY GENERAL MEETING, 2007. IEEE, IEEE, PI, 1 June 2007 (2007-06-01), pages 1 - 7, XP031118635, ISBN: 978-1-4244-1296-9
- HOPPE-KLIPPER MARTIN ET AL: "Integration Erneuerbarer Energien in Versorgungsstrukturen", TECHNISCHE ANFORDERUNGEN AN DEZENTRALE VERSORGUNGSSTRUKTUREN IN EUROPA, 31 December 2001 (2001-12-31), pages 1 - 182, XP055877301, Retrieved from the Internet <URL:http://www.fvee.de/fileadmin/publikationen/Themenhefte/th2001/th2001.pdf> [retrieved on 20220110]
- MARCO GIUNTOLI ET AL: "Optimized Thermal and Electrical Scheduling of a Large Scale Virtual Power Plant in the Presence of Energy Storages", IEEE TRANSACTIONS ON SMART GRID, IEEE, USA, vol. 4, no. 2, 1 June 2013 (2013-06-01), pages 942 - 955, XP011510775, ISSN: 1949-3053, DOI: 10.1109/TSG.2012.2227513

## Beschreibung

Die Erfindung betrifft ein Verfahren zum Steuern eines Austauschs von Energie in einem Energiesystem mit mehreren Energiesubsystemen, welche jeweils für den Austausch von Energie untereinander verbunden sind. Weiterhin umfasst die Erfindung eine Steuerungszentrale und ein Energiesystem. Teil der Erfindung sind außerdem ein Computerprogramm und ein Speichermedium.

Herstellung und Verbrauch elektrischer Energie müssen an einem Stromnetz stets in einem ausgeglichenen Maß erfolgen. Aufgrund gering ausgeprägter netzseitiger Speicherungsmöglichkeiten für elektrische Energie ist es insbesondere nötig, dass elektrische Energie zur selben Zeit erzeugt wird, in der sie auch verbraucht wird. Insbesondere durch den Zubau dezentraler Kleinkraftwerke, beispielsweise Photovoltaik-Anlagen, Blockheizkraftwerke, Biogasanlagen, Windräder zur Stromerzeugung sowie stationäre Speicher, insbesondere Batteriespeicher, ist eine einfache und effiziente Steuerung beziehungsweise Regelung nötig.

Die EP 1 202 425 A2 beschreibt ein System zum Planen einer Energieversorgung von Energieverbrauchern. Das System umfasst ein erstes Subsystem, welches mit einer Koordinierungseinheit verknüpft ist, und ein zweites Subsystem, welches mit einem Energieversorger verknüpft ist.

Die DE 10 2012 221 291 A1 offenbart ein Aushandeln monetärer Transaktionen durch eine zentrale Einheit in mehreren Subnetzen eines multi-modalen Netzes. Dabei werden Angebote und Anfragen von Agenten für die Ressourcen eines jeweiligen Subnetzes gesammelt und basierend darauf Käufe und Verkäufe von Ressourcen vermittelt.

Weiterer Stand der Technik ist wie folgt bekannt:
HOMMELBERG M P F ET AL: "Distributed Control Concepts using Multi-Agent technology and Automatic Markets: An indispensable feature of smart power grids",POWER ENGINEERING SOCIETY GENERAL MEETING, 2007. IEEE, IEEE, PI, 1. Juni 2007 (2007-06-01), Seiten 1-7, XP031118635,ISBN: 978-1-4244-1296-9,
Hoppe-Klipper Martin ET AL: "Integration Erneuerbarer Energien in Versorgungsstrukturen",Technische Anforderungen an dezentrale Versorgungsstrukturen in Europa, 31. Dezember 2001 (2001-12-31), Seiten 1-182, XP055877301,
MARCO GIUNTOLI ET AL: "Optimized Thermal and Electrical Scheduling of a Large Scale Virtual Power Plant in the Presence of Energy Storages",IEEE TRANSACTIONS ON SMART GRID, IEEE, USA, Bd. 4, Nr. 2, 1. Juni 2013 (2013-06-01), Seiten 942-955, XP011510775,ISSN: 1949-3053, DOI: 10.1109/ TSG.2012.2227513

Es ist somit Aufgabe der vorliegenden Erfindung, eine verbesserte Steuerung eines Austauschs von Energie zu ermöglichen. Diese Aufgabe wird erfindungsgemäß gelöst durch die unabhängigen Patentansprüche. Vorteilhafte Ausführungsformen und zweckmäßige Weiterbildungen sind Gegenstand der Unteransprüche.

Ein erster Aspekt der Erfindung betrifft ein Verfahren zum Steuern eines Austauschs von Energie in einem Energiesystem mit mehreren Energiesubsystemen, welche jeweils für den Austausch von Energie untereinander verbunden sind, mit folgenden Schritten:
- Empfangenen einer Offerte aus einem ersten der Energiesubsysteme durch eine Steuerungszentrale, wobei die ersten Einspeisedaten jeweilig Vergütungskonditionen des ersten Energiesubsystems zum Empfang und/oder zur Bereitstellung von Energie umfassen,
- Übermitteln der ersten Einspeisedaten an ein zweites aus den mehreren Energiesubsystemen,
- Empfangen von an die ersten Einspeisedaten angepassten zweiten Einspeisedaten aus dem zweiten Energiesubsystem durch die Steuerungszentrale, wobei die zweiten Einspeisedaten jeweilige Vergütungskonditionen des zweiten Energiesubsystems zum Empfang und/oder zur Bereitstellung von Energie umfassen, und die zweiten Einspeisedaten durch das zweite Energiesubsystem in Abhängigkeit von einem Systemzustand des zweiten Energiesubsystems bestimmt werden, wobei der Systemzustand einen Ladezustand eines Energiespeichers des zweiten Energiesubsystems umfasst, und

- Steuern des Austauschs von Energie zwischen dem ersten und dem zweiten Energiesubsystem entsprechend der ersten und zweiten Einspeisedaten durch die Steuerungszentrale.

Bei der Energie handelt es sich insbesondere um elektrische Energie. Es kann sich jedoch alternativ auch um Wärme oder Kälte handeln. Mit anderen Worten meint der Begriff "Energie" beispielsweise "elektrische Energie", "Wärmeenergie" oder "Kälteenergie". Im Folgenden ist von "elektrischer Energie" die Rede. Dies soll die Erfindung nicht einschränken, im Gegenteil gelten alle folgenden Ausführungen bezüglich elektrischer Energie analog auch für andere Energieformen.

Das oben genannte Energiesystem kann die Steuerungszentrale und die mehreren Energiesubsysteme umfassen. Alternativ ist es möglich, dass die Energiesubsysteme durch eine jeweilige Steuerungseinheit gesteuert werden. In diesem Fall erfolgt die Kommunikation des jeweiligen Energiesubsystems mit der Steuerungszentrale durch die entsprechende Steuerungseinheit des jeweiligen Energiesubsystems. In diesem Fall kann das Energiesystem beispielsweise mehrere Steuerungseinheiten für jedes der Energiesubsysteme sowie die Steuerungszentrale umfassen. Die Einspeisedaten können dann aus den jeweiligen Steuerungseinheiten der Energiesubsysteme empfangen werden. Das Steuern des Austauschs elektrischer Energie zwischen den Energiesubsystemen kann durch Steuern der jeweiligen Steuerungseinheiten der Energiesubsysteme erfolgen.

Die Energiesubsysteme können sich jeweils über einen einzigen Haushalt, über ein einziges Gebäude oder über einen Betrieb erstrecken. Jedes der Energiesubsysteme kann beispielsweise eine oder mehrere der folgenden Anlagen umfassen: Photovoltaik-Anlage, Biogasanlagen, Blockheizkraftwerk, elektrischer Energiespeicher (insbesondere stationärer Batteriespeicher), Elektrofahrzeug, Windgenerator. Zusätzlich können die Energiesubsysteme reine Verbraucher elektrischer Energie wie zum Beispiel Industrieanlagen, Kochgeräte, Waschmaschinen oder beliebige Haushaltsgeräte umfassen. Das Energiesystem kann beispielsweise aus den Energiesubsystemen einer Region, einer Stadt, einer Gemeinde, eines Landkreises oder einer auf andere Weise definierten Region gebildet sein. Dabei ist insbesondere vorgesehen, dass sich das Energiesystem über einen Bereich geeigneter Größe erstreckt. Insbesondere ist vorgesehen, dass in einem Land mehrere räumlich voneinander getrennte Energiesysteme koexistieren. Bei der Steuerungszentrale kann es sich um einen zentralen Server des Energiesystems handeln. Der Server kann beispielsweise über das Internet mit den Energiesubsystemen, insbesondere mit deren Steuerungseinheiten, kommunizieren. Dabei muss die Steuerungszentrale nicht zwangsläufig in der durch das Energiesystem abgedeckten Region liegen.

Die jeweiligen Einspeisedaten können angeben, zu welchen Vergütungskonditionen ein jeweiliges Energiesubsystem zum Empfang und/oder zur Bereitstellung von elektrischer Energie bereit ist. Die Vergütungskonditionen können beispielsweise einen Preis für eine Energiemenge umfassen. Beispielsweise enthalten die Einspeisedaten somit ein Angebot zum Bereitstellen einer bestimmten Energiemenge zu bestimmten Vergütungskonditionen, also insbesondere zu einem bestimmten Preis, und/oder eine Nachfrage zur Abnahme einer bestimmten Energiemenge zu bestimmten Vergütungskonditionen. Diese sogenannten bestimmten Vergütungskonditionen und/oder die sogenannte bestimmte Energiemenge können durch das erste Energiesubsystem abhängig von dessen Betrieb, insbesondere abhängig von einem Systemzustand des ersten Energiesubsystems, bestimmt werden.

Die zweiten Einspeisedaten können durch das zweite Energiesubsystem derart bestimmt werden, dass zumindest eine teilweise Übereinstimmung mit den ersten Einspeisedaten erzielt wird. In diesem Fall kann es zum Austausch von Energie kommen. Beispielsweise enthalten die zweiten Einspeisedaten eine Annahme des mittels der ersten Einspeisedaten übermittelten Angebots oder der mittels der ersten Einspeisedaten übermittelten Nachfrage. Auf diese Weise kann sich das zweite Energiesubsystem dazu bereit erklären, die oben genannte bestimmte Energiemenge zu dem oben genannten bestimmten Preis bereitzustellen oder abzunehmen. Alternativ kann mittels der zweiten Einspeisedaten ein Gegenangebot übermittelt werden, welches beispielsweise nur die Abnahme eines Teils der mittels der ersten Einspeisedaten angebotenen bestimmten Energiemenge oder nur die Bereitstellung eines Teils der mittels der ersten Einspeisedaten nachgefragten Energiemenge beinhaltet. Alternativ können mittels der zweiten Einspeisedaten andere Vergütungskonditionen, als mittels der ersten Einspeisedaten übermittelt, vorgeschlagen werden.

Insbesondere ist vorgesehen, dass die ersten und/oder die zweiten Einspeisedaten durch die jeweilige Steuerungseinrichtung des entsprechenden Energiesubsystems automatisiert erstellt werden. Beispielsweise wird der Betrieb der Energiesubsysteme durch die jeweilige Steuerungseinheit eines entsprechenden Energiesubsystems optimiert. Durch den Austausch der Energie zwischen dem ersten Energiesubsystem und dem zweiten Energiesubsystem kann sowohl der Betrieb bzw. der Betriebszustand des ersten Energiesubsystems als auch des zweiten Energiesubsystems verbessert bzw. optimiert werden. Mit anderen Worten kann durch den Austausch der Energie eine Effizienz des Energiesystems insgesamt gesteigert werden.

Bei dem Steuern des Austauschs von Energie zwischen dem ersten und dem zweiten Energiesubsystem kann die Steuerungszentrale festlegen, wann und in welchem Umfang die Energie ausgetauscht wird. Beispielsweise übermittelt die Steuerungszentrale hierzu jeweilige Steuerungsdaten an das erste und das zweite Energiesubsystem. Auf diese Weise kann der Austausch der Energie direkt oder indirekt durch die Steuerungszentrale gesteuert werden.

Im Allgemeinen kann vorgesehen sein, dass sich die ersten Einspeisedaten auf ein erstes Zeitintervall und die zweiten Einspeisedaten auf ein zweites Zeitintervall beziehen. Dabei ist vorgesehen, dass die jeweils übermittelten Vergütungskonditionen zum Empfang und/oder zur Bereitstellung von Energie nur für das Zeitintervall gültig sind, auf welches sich die jeweiligen Einspeisedaten beziehen. Zusätzlich kann vorgesehen sein, dass der Austausch der Energie in dem entsprechenden Zeitintervall erfolgt. Insbesondere wird anhand der ersten und der zweiten Einspeisedaten der Austausch der Energie für das jeweilige Zeitintervall im Voraus geplant.

Die Benennung der Energiesubsysteme in "erstes Energiesubsystem" und "zweites Energiesubsystem" dient vorliegend vor allem der besseren Beschreibung. Ein Energiesubsystem kann zu unterschiedlichen Zeiten oder gleichzeitig als "erstes Energiesubsystem" und "zweites Energiesubsystem" im Sinne der vorliegenden Erfindung fungieren. Insbesondere ist vorgesehen, dass die ersten Einspeisedaten durch die Steuerungszentrale nicht an ein einziges zweites Energiesubsystem, sondern an mehrere zweite Energiesubsysteme übermittelt werden. Alternativ oder zusätzlich kann vorgesehen sein, dass die Steuerungszentrale erst Einspeisedaten von mehreren ersten Steuerungszentrale empfängt.

Gemäß einer Weiterbildung ist vorgesehen, dass sich die ersten Einspeisedaten und die zweiten Einspeisedaten auf ein gemeinsames Zeitintervall beziehen, in welchem der Austausch der Energie erfolgen soll. Mit anderen Worten bezieht sich ein jeweiliges Angebot zur Bereitstellung von Energie und/oder eine jeweilige Nachfrage zum Empfang von elektrischer Energie, welche jeweils mittels der ersten Einspeisedaten bzw. der zweiten Einspeisedaten empfangen werden können, jeweils nur auf das besagte Zeitintervall. Insbesondere ist vorgesehen, dass es nicht zum Austausch von Energie kommen kann, wenn sich die ersten und die zweiten Einspeisedaten auf unterschiedliche Zeitintervalle beziehen. Auf diese Weise kann der Austausch weiter verbessert werden.

Gemäß einer Weiterbildung ist vorgesehen, dass die ersten Einspeisedaten durch das erste Energiesubsystem in Abhängigkeit von einem Systemzustand des ersten Energiesubsystems bestimmt werden. Insbesondere kann der Systemzustand des jeweiligen Energiesubsystems einen geschätzten Verbrauch an elektrischer Energie durch das jeweilige Subsystem, oder Wetterdaten bzw. eine Wetterprognose umfassen. Insbesondere wird der Systemzustand für das erste bzw. das zweite Zeitintervall im Voraus modelliert, berechnet oder simuliert. Auf diese Weise kann der Betrieb des Energiesystems und der einzelnen Energiesubsysteme verbessert werden.

Gemäß einer Weiterbildung ist vorgesehen, dass der jeweilige Systemzustand des ersten Energiesubsystems und/oder des zweiten Energiesubsystems auf einer Messung und/oder einer Prognose basiert. Mit anderen Worten kann der jeweilige Systemzustand der Energiesubsysteme im Voraus prognostiziert werden. Insbesondere wird der jeweilige Systemzustand zu Beginn des ersten bzw. zweiten Zeitintervalls prognostiziert. Auf diese Weise kann ein flexiblerer Betrieb der Energiesubsysteme erzielt werden.

Gemäß einer Weiterbildung ist vorgesehen, dass zum Bestimmen der ersten bzw. zweiten Einspeisedaten ein Optimierungsproblem, insbesondere im Sinne einer Optimalsteuerung oder Betriebsoptimierung, durch das erste Energiesubsystem und/oder das zweite Energiesubsystem basierend auf dem jeweiligen Systemzustand gelöst wird. Mit anderen Worten können die ersten bzw. die zweiten Einspeisedaten das Ergebnis eines solchen Optimierungsproblems für das erste und/oder das zweite Energiesubsystem basierend auf dem jeweiligen Systemzustand sein. In manchen Ausführungsformen wird zum Lösen des jeweiligen Optimierungsproblems eines Energiesubsystems nur der Systemzustand des entsprechenden Energiesubsystems herangezogen. In anderen Ausführungsformen kann zusätzlich der jeweilige Systemzustand eines oder mehrerer weiterer der mehreren Energiesubsysteme herangezogen werden. Auf diese Weise kann der Betrieb der einzelnen Energiesubsysteme und somit des Energiesystems insgesamt verbessert werden.

Gemäß einer Weiterbildung ist vorgesehen, dass im Falle einer Abweichung zwischen einem zuvor prognostizierten Systemzustand für ein Zeitintervall und einem später festgestellten Systemzustand für das selbe Zeitintervall die ersten bzw. zweiten Einspeisedaten derart bestimmt werden, dass die Abweichung minimiert wird. Beispielsweise tritt eine Abweichung zwischen einem zuvor prognostizierten Systemzustand und einem später festgestellten, also gemessenen, Systemzustand für ein bestimmtes Zeitintervall des ersten bzw. zweiten Energiesubsystems auf. Die ersten bzw. zweiten Einspeisedaten können dann, beispielsweise durch das entsprechende Energiesubsystem oder dessen Steuerungseinheit, derart bestimmt werden, dass diese Abweichung minimiert wird. In einem konkreten Beispiel kann dies bedeuten, dass das jeweilige Energiesubsystem weniger Energie erzeugt als prognostiziert wurde, der Energiespeicher stärker entleert ist als prognostiziert wurde und/oder einem anderem der mehreren Energiesubsysteme die Bereitstellung einer Energiemenge für das entsprechende Zeitintervall zugesagt wurde. In diesem Fall kann mittels der entsprechenden Einspeisedaten der Betrieb des entsprechenden Energiesubsystems an die Prognose angepasst werden, beispielsweise durch das Übermitteln einer Anfrage nach zusätzlicher Energie. Der später festgestellte Systemzustand kann beispielsweise zu Beginn des Zeitintervalls gemessen werden oder eine spätere, genauere Prognose als die zuvor erfolgte Prognose sein. Auf diese Weise kann eine Flexibilität der Energiesubsysteme erhöht werden.

Gemäß einer Weiterbildung ist vorgesehen, dass eine Durchleitungsvergütung für ein zum Austausch der Energie genutztes Verteilnetz bestimmt wird. Beispielsweise wird die Durchleitungsvergütung abhängig von einer Nutzung des Verteilnetzes nach einer vorbestimmten Vorschrift berechnet. Die Durchleitungsvergütung kann beim Steuern des Austauschs der Energie berücksichtigt werden. Bei dem Verteilnetz handelt es sich insbesondere um ein Stromnetz, insbesondere dann, wenn es sich bei der Energie um elektrische Energie handelt. Handelt es sich bei der Energie beispielsweise um Wärme- oder Kälteenergie, so kann es sich bei dem Verteilnetz um einen Fernwärmenetz beziehungsweise ein ähnliches Verteilnetz handeln. Auf diese Weise kann berücksichtigt werden, dass durch die Übertragung der elektrischen Energie ein zusätzlicher Aufwand entsteht.

Gemäß einer Weiterbildung ist vorgesehen, dass die Durchleitungsvergütung zusammen mit den ersten Einspeisedaten an das zweite Energiesubsystem übermittelt und/oder die ersten Einspeisedaten entsprechen der Durchleitungsvergütung angepasst werden. Das Übermitteln bzw. Anpassen kann durch die Steuerungszentrale erfolgen. Besonders vorteilhaft ist es, wenn dieses Übermitteln bzw. Anpassen automatisiert erfolgt. Wird die Durchleitungsvergütung an das zweite Energiesubsystem übermittelt, so können diese durch die zweiten Einspeisedaten berücksichtigt sein bzw. berücksichtigt werden. Mit anderen Worten empfängt die Steuerungszentrale dann zweite Einspeisedaten, die an die Durchleitungsvergütung angepasst sind. Beispielsweise wird ein Preis der Durchleitungsvergütung bei einem Preis pro Energiemenge im Rahmen der zweiten Einspeisedaten berücksichtigt. Auf diese Weise kann die Durchleitungsvergütung bzw. Netzkosten besonders vorteilhaft berücksichtigt werden.

Gemäß einer Weiterbildung ist vorgesehen, dass die Durchleitungsvergütung abhängig von einer Entfernung zwischen dem ersten und dem zweiten Energiesubsystem und/oder abhängig von einer Netzauslastung des Verteilnetzes bestimmt wird. Mit anderen Worten kann durch Leitungsvergütung in Abhängigkeit von der Entfernung zwischen dem ersten und dem zweiten Energiesubsystem und/oder in Abhängigkeit von der Netzauslastung des Verteilnetzes festgelegt werden. Beispielsweise wird ein Preis, welche durch die Durchleitungsvergütung festgelegt ist, umso höher festgelegt, je größer die Entfernung zwischen dem ersten und dem zweiten Energiesubsystem ist und/oder je größer eine Netzauslastung zum Zeitpunkt des Austauschs der elektrischen Energie ist. Auf diese Weise kann die Netzauslastung des Verteilnetzes besonders gut gesteuert werden. Insbesondere kann einer zu geringen Netzauslastung durch Senken der Durchleitungsvergütung und einer zu hohen Netzauslastung durch Erhöhen der Durchleitungsvergütung entgegengewirkt werden.

Beispielsweise ist vorgesehen, dass die Durchleitungsvergütung durch die Steuerungszentrale bestimmt oder durch die Steuerungszentrale aus einer weiteren Servereinrichtung empfangen wird. Im ersteren Fall kann die Steuerungszentrale Informationen, beispielsweise eine Karte und Leistungsdaten, über das Verteilnetz abrufen und/oder gespeichert haben und daraus die Durchleitungsvergütung errechnen. Im anderen Fall kann die Steuerungszentrale die Durchleitungsvergütung aus der weiteren Steuerungszentrale, insbesondere über das Internet, empfangen. Bei der weiteren Steuerungszentrale kann es sich beispielsweise um die Steuerungszentrale des Verteilnetzes beziehungsweise eines Netzanbieters handeln.

Gemäß einer Weiterbildung ist vorgesehen, dass bei dem Steuern des Austauschs elektrischer Energie zwischen dem ersten und dem zweiten Energiesubsystem eine zu übertragende Energiemenge bestimmt wird. Insbesondere kann durch die Steuerungszentrale als die zu übertragende Energiemenge festgelegt werden, welche Energiemenge das erste an das zweite Energiesubsystem und/oder das zweite an das erste Energiesubsystem übertragen muss. Diese Festlegung erfolgt insbesondere basierend auf den ersten und den zweiten Einspeisedaten sowie optional basierend auf der Durchleitungsvergütung. Insbesondere bezieht sich die zu übertragende Energiemenge auf das oben genannte Zeitintervall, für welche die ersten Einspeisedaten und die zweiten Einspeisedaten Gültigkeit haben. Durch die zu übertragende Energiemenge kann der Austausch elektrischer Energie zusätzlich spezifiziert werden.

Gemäß einer Weiterbildung ist vorgesehen, dass nachdem der Austausch der elektrischen Energie erfolgt ist, eine tatsächlich übertragene Energiemenge bestimmt und abhängig davon ein Abweichungsmaß bestimmt wird, welches eine Abweichung zwischen der zu übertragenden Energiemenge und der tatsächlich übertragenen Energiemenge charakterisiert. Mit anderen Worten wird nach dem Austausch der elektrischen Energie die bei dem Austausch übertragene Energiemenge bestimmt. Abhängig von der übertragenen Energiemenge und der zuvor festgelegten zu übertragenden Energiemenge wird anschließend das Abweichungsmaß bestimmt, welches die Abweichung zwischen diesen beiden Größen angibt. Das Abweichungsmaß kann umso größer sein, je größer die Abweichung zwischen tatsächlich übertragener und zu übertragender Energiemenge ist. Alternativ kann der Betrag des Abweichungsmaßes die Abweichung angeben und das Vorzeichen des Abweichungsmaßes angeben, ob die tatsächlich übertragene Energiemenge größer oder kleiner ist als die zu übertragende Energiemenge. Das Abweichungsmaß kann dabei charakterisieren, wie genau sich das erste und das zweite Energiesubsysteme an den durch die Steuerungszentrale festgelegten Austausch an elektrischer Energie gehalten haben.

In weiterer Ausgestaltung kann abhängig von dem Abweichungsmaß eine Abweichungsvergütung festgelegt werden, die dasjenige Energiesubsystem, welches die Abweichung zu verantworten hat, an das jeweils andere Energiesubsysteme und/oder die Steuerungszentrale übermitteln muss. Insbesondere hat dasjenige Energiesubsystem, welches eine geringere Energiemenge bereitstellt beziehungsweise oder nur zum Empfang einer geringeren Energiemenge als durch das Steuerungssubsystem festgelegt bereit ist, die Abweichung zu verantworten. Anhand der Abweichungsvergütung kann insbesondere eine Vertragsstrafe festgelegt werden. Durch das Abweichungsmaß beziehungsweise die Abweichungsvergütung kann gewährleistet werden, dass die Energiesubsysteme den Austausch von Energie entsprechend der Steuerung durch die Steuerungszentrale vornehmen.

Ein zweiter Aspekt der Erfindung betrifft eine Steuerungszentrale, die dazu eingerichtet ist, ein erfindungsgemäßes Verfahren, wie es im Rahmen der vorliegenden Anmeldung beschrieben ist, durchzuführen. Insbesondere kann es sich bei der Steuerungszentrale um eine Recheneinheit, insbesondere einen Server, handeln.

Ein weiterer Aspekt der Erfindung betrifft ein Energiesystem mit
- mehreren Steuerungseinheiten zum Steuern eines jeweiligen Energiesubsystems in Bezug auf einen Austausch von Energie des Energiesubsystems mit anderen Energiesubsystemen und
- einer Steuerungszentrale zum Empfangen erster Einspeisedaten aus einem ersten der Energiesubsysteme, wobei die ersten Einspeisedaten jeweilige Vergütungskonditionen des ersten Energiesubsystems zum Empfang und/oder zur Bereitstellung von Energie umfassen, zum Übermitteln der ersten Einspeisedaten an ein zweites aus den mehreren Energiesubsystemen, zum Empfangen von an die ersten Einspeisedaten angepassten zweiten Einspeisedaten aus dem zweiten Energiesubsystem, wobei die zweiten Einspeisedaten jeweilige Vergütungskonditionen des zweiten Energiesubsystems zum Empfang und/oder zur Bereitstellung von Energie umfassen und die zweiten Einspeisedaten durch das zweite Energiesubsystem in Abhängigkeit von einem Systemzustand des zweiten Energiesubsystems bestimmt werden, wobei der Systemzustand einen Ladezustand eines Energiespeichers des zweiten Energiesubsystems umfasst, und zum Steuern des Austauschs von Energie zwischen dem ersten und dem zweiten Energiesubsystem entsprechend der ersten und zweiten Einspeisedaten. Insbesondere umfasst das Energiesystem die obengenannte Steuerungszentrale, die dazu eingerichtet ist, ein erfindungsgemäßes Verfahren, wie es im Rahmen der vorliegenden Anmeldung beschrieben ist, durchzuführen.

Die Energiesubsysteme können Teil des Energiesystems sein. In anderen Ausführungsformen des Energiesystems werden die Steuerungseinheiten als Teil des Energiesystems aufgefasst, die Energiesubsysteme jedoch nicht.

Die erfindungsgemäße Steuerungszentrale und das erfindungsgemäße Energiesystem werden jeweils auch durch Merkmale weitergebildet, wie sie bereits in Verbindung mit dem erfindungsgemäßen Verfahren offenbart wurden. Aus Gründen der Knappheit sind diese Merkmale hier nicht nochmals in Bezug auf die Steuerungszentrale und das Energiesystem aufgeführt.

Zur Erfindung gehört außerdem ein Computerprogramm, welches direkt in einen Speicher einer erfindungsgemäßen Steuerungszentrale ladbar ist, mit Programmcodemitteln, um die Schritte des erfindungsgemäßen Verfahrens auszuführen, wenn das Programm in der Steuerungszentrale ausgeführt wird. Das erfindungsgemäße Computerprogramm implementiert das erfindungsgemäße Verfahren auf einer erfindungsgemäßen Steuerungszentrale, wenn es auf der Steuerungszentrale ausgeführt wird. Dementsprechend gehört zur Erfindung außerdem ein Speichermedium mit darauf gespeicherten elektronisch lesbaren Steuerinformationen, welche zumindest das genannte Computerprogramm umfassen und derart ausgestaltet sind, dass sie bei Verwendung des Speichermediums in einer erfindungsgemäßen Steuerungszentrale das erfindungsgemäße Verfahren durchführen. Das Speichermedium kann beispielsweise zum digitalen oder analogen Speichern von Daten eingerichtet sein. Das Speichermedium kann einfach oder mehrfach beschreibbar, flüchtig (volatil) oder nicht flüchtig sein.

Die vorliegende Erfindung wird nun anhand der beigefügten Zeichnungen näher erläutert, in denen zeigen:
- FIG 1: in einem Blockdiagramm mehrere Energiesubsysteme und eine Steuerungszentrale; und
- FIG 2: ein Ablaufdiagramm einer beispielhaften Ausführungsform des vorliegenden Verfahrens.

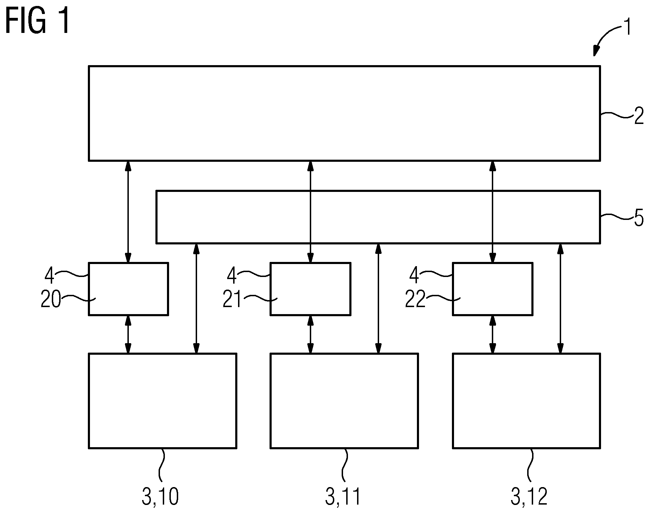

FIG 1 zeigt in einem Blockdiagramm eine Übersicht über mehrere Steuerungseinheiten 4 und eine Steuerungszentrale 2, welche gemeinsam Teil eines Energiesystems 1 sind. Fig. 1 zeigt außerdem mehrere Energiesubsysteme 3 sowie Verteilnetz 5, auch Stromnetz oder elektrisches Netz genannt, beispielsweise das 50 Hz-Verbundnetz.

Die mehreren Steuerungseinheiten 4 sind jeweils genau einem der Energiesubsysteme 3 zugeordnet. Die Steuerungseinheiten 4 sind dazu eingerichtet, das jeweils zugeordnete Energiesubsystem 3 zu steuern. Insbesondere sind die Steuerungseinheiten 4 dazu eingerichtet, die Erzeugung und den Verbrauch elektrischer Energie durch das entsprechende Energiesubsystem 3 zu steuern. Aus dem können die Energiesubsysteme 3 dazu eingerichtet sein, eine Bereitstellung und einen Empfang elektrischer Energie mit dem Verteilnetz 5 zu steuern. Hierzu kommuniziert die jeweilige Steuerungseinheit 4 mit dem entsprechenden Energiesubsystem 3. Insbesondere befinden sich die Steuerungseinheiten 4 am Ort des jeweiligen Energiesubsystems 3. Die Steuerungseinheiten 4 können auch als jeweilige Energiemanagementsysteme der Energiesubsysteme 3 bezeichnet werden.

Jedes der Energiesubsysteme 3 kann beispielsweise eine oder mehrere der folgenden Anlagen umfassen: Photovoltaik-Anlage, Biogasanlagen, Blockheizkraftwerk, elektrischer Energiespeicher (insbesondere stationärer Batteriespeicher), Elektrofahrzeug, Windgenerator. Zusätzlich können die Energiesubsysteme 3 Verbraucher elektrischer Energie wie zum Beispiel Industrieanlagen, Kochgeräte, Waschmaschinen oder beliebige Haushaltsgeräte umfassen. Bei den Steuerungseinheit 4 kann es sich um Steuerrechner der jeweiligen Energiesubsysteme 3 handeln. Die Energiesubsysteme 3 des Energiesystems 1 können in derselben Straße, Nachbarschaft, Stadtviertel, Ortschaft, Stadt, Region, Landkreis oder auf sonstige Weise in einem vorgegebenen Bereich, insbesondere Radius, angeordnet sein.

Die Energiesubsysteme 3 sind zum Austausch elektrischer Energie mit dem Verteilnetz 5 verbunden. Indirekt sind die Energiesubsysteme 3 somit über das Verteilnetz 5 jeweils untereinander verbunden. Auf diese Weise können die Energiesubsysteme 3 elektrische Energie untereinander austauschen. Dieser Austausch elektrischer Energie zwischen den Energiesubsysteme 3 wird vorliegend durch die Steuerungszentrale 2 gesteuert. Hierzu sind die Steuerungseinheiten 4 jeweils mit der Steuerungszentrale 2 vernetzt. Diese Vernetzung kann beispielsweise über das Internet, das Mobilfunknetz, über eine sonstige Funkverbindung oder auf beliebige Weise bereitgestellt sein. Beispielsweise handelt es sich bei der Steuerungszentrale 2 um eine Servereinrichtung beziehungsweise einen Server.

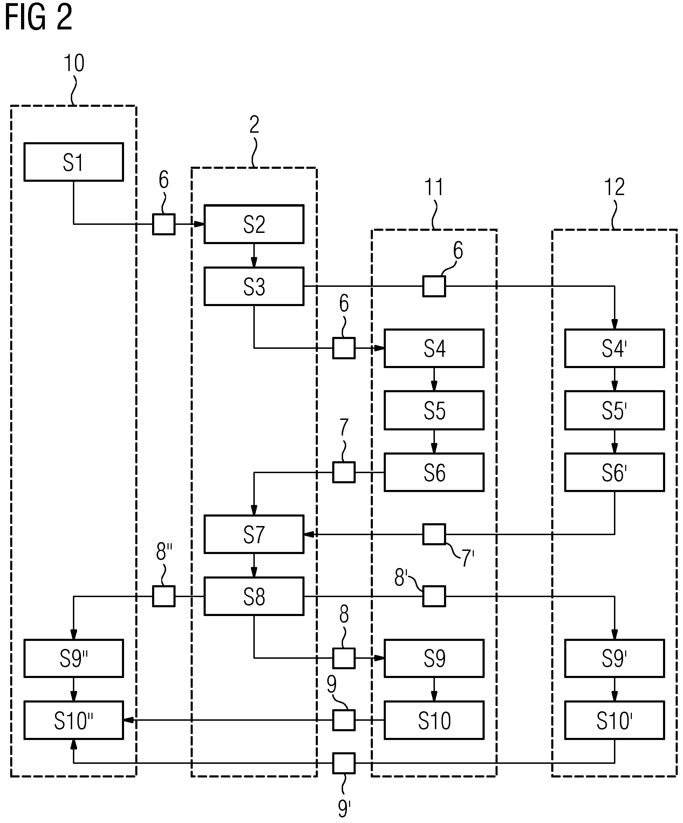

Die FIG 2 zeigt das Verfahren zum Steuern des Austauschs von elektrischer Energie in einer beispielhaften Ausführungsform. Die Energiesubsysteme 3 sind zur besseren Unterscheidung im Folgenden einzeln nummeriert als Energiesubsysteme 10, 11, 12 ebenso wie die Steuerungseinheiten 4 als Steuerungseinheiten 20, 21, 22. In einem Schritt S1 werden durch ein erstes Energiesubsysteme 10, insbesondere durch dessen Steuerungseinheiten 20, erste Einspeisedaten 6 bereitgestellt.

Die ersten Einspeisedaten 6 werden insbesondere in Echtzeit oder im Vorhinein (beispielsweise 1 Stunde, 2 Stunden, einen halben Tag oder einen ganzen Tag im Voraus) für ein bestimmtes diskretes Zeitintervall t bestimmt beziehungsweise berechnet. Hierbei berücksichtigt werden vorteilhafterweise ein Systemzustand des Energiesubsystems 10 (beispielsweise ein Ladezustand eines elektrischen Energiespeichers des Energiesubsystems 10) zu Beginn des Zeitintervalls t sowie unterschiedliche Vorhersagen. Diese Vorhersagen können beispielsweise das Wetter, eine daraus abgeleitete Erzeugung elektrischer Energie und/oder Schätzungen für einen Energieverbrauch innerhalb und/oder außerhalb des Energiesubsystems 10 in dem entsprechenden Zeitintervall t betreffen. Die Vorhersagen können beispielsweise von einem Wetterdienst und/oder von einer sonstigen Vorhersageeinrichtung bezogen werden. Alternativ oder zusätzlich können die Vorhersagen die genannten Größen auch für einen längeren Zeitraum, beispielsweise einen halben Tag oder einen ganzen Tag, betreffen. Insgesamt kann auf diese Weise bestimmt werden, zwischen Vergütungskonditionen, also zu welchem Preis das Energiesubsystem 10 welche Menge an elektrischer Energie bereitstellt oder nachfragt. Die ersten Einspeisedaten 6 werden an die Steuerungszentrale 2 übermittelt.

In einem Schritt S2 werden die ersten Einspeisedaten 6 durch die Steuerungszentrale 2 empfangen. Zusätzlich können in dem Schritt S2 die ersten Einspeisedaten 6 durch die Steuerungszentrale 2 ausgewertet werden. Beispielsweise können die ersten Einspeisedaten 6 durch die Steuerungszentrale 2 in eine abrufbare Datenbank übertragen werden. Diese Datenbank kann durch die Energiesubsysteme 3 beziehungsweise der Steuerungseinheiten 4 abgerufen werden. In einer solchen Datenbank können alle Einspeisedaten in dem Energiesystem 1 gesammelt werden. Eine solche Datenbank kann auch mit dem englischen Fachbegriff "open order book (COOB)" bezeichnet werden. Anhand dieser Datenbank können die Einspeisedaten unterschiedliche Energiesubsysteme 3 zusammengeführt werden. Insbesondere wird anhand der Datenbank der Austausch von Energie zwischen den Energiesubsysteme 3 durch die Steuerungszentrale 2 festgelegt.

Vergleichbare erste Einspeisedaten 6 können durch die Steuerungszentrale 2 von mehreren Energiesubsysteme 3 empfangen werden. Die ersten Einspeisedaten 6 können als feststehende Angebote im Rahmen einer sogenannten "push strategy" gelten. Dabei können durch die entsprechenden Energiesubsysteme 3 bzw. deren Steuerungseinheiten 4 die ersten Einspeisedaten 6 als feststehende Angebote in der Datenbank der Steuerungszentrale 2 platziert werden. Die Steuerungszentrale 2 kann die ersten Einspeisedaten 6 unterschiedlicher Energiesubsysteme 3 bzw. deren Steuerungseinheiten 4 miteinander verknüpfen. Möglicherweise ergeben sich dabei zusammenpassende erste Einspeisedaten 6, wobei zusammenpassend bedeutet, dass durch die entsprechenden ersten Einspeisedaten 6 jeweils passende Angebote und Nachfragen nach elektrischer Energie zusammenkommen. In diesem Fall kann die Steuerungszentrale 2 den Austausch elektrischer Energie anhand der ersten Einspeisedaten 6 steuern.

In einem Schritt S3 übermittelt die Steuerungszentrale 2 die ersten Einspeisedaten 6 an zumindest einige der übrigen Energiesubsysteme 3. Vorliegend werden die ersten Einspeisedaten 6 an die Energiesubsysteme 11 und 12 beziehungsweise deren Steuerungseinheiten 21 und 22 übermittelt.

Die Energiesubsysteme 11 und 12 beziehungsweise deren Steuerungseinheiten 21 und 22 empfangen die ersten Einspeisedaten 6 in einem jeweiligen Schritt S4 beziehungsweise S4'. In einem Schritt S5, S5' werden die ersten Einspeisedaten 6 durch die jeweiligen Steuerungseinheiten 21 und 22 analysiert. Außerdem werden in dem Schritt S5, S5' zweite Einspeisedaten 7,7' durch die Steuerungseinheiten 21 und 22 bestimmt beziehungsweise erstellt.

Die zweiten Einspeisedaten 7,7' werden insbesondere in Echtzeit oder im Vorhinein (beispielsweise 1 Stunde, 2 Stunden, einen halben Tag oder einen ganzen Tag im Voraus) für ein bestimmtes diskretes Zeitintervall t bestimmt beziehungsweise berechnet. Hierbei berücksichtigt werden die ersten Einspeisedaten 6, sowie optionaler Weise ein Systemzustand des jeweiligen Energiesubsystems 11 oder 12 (beispielsweise ein Ladezustand eines elektrischen Energiespeichers des jeweiligen Energiesubsystems 11 oder 12) zu Beginn des Zeitintervalls t sowie ebenfalls optionaler Weise unterschiedliche Vorhersagen. Diese Vorhersagen können beispielsweise das Wetter, eine daraus abgeleitete Erzeugung elektrischer Energie und/oder Schätzungen für einen Energieverbrauch innerhalb und/oder außerhalb des jeweiligen Energiesubsystems 11 oder 12 in dem entsprechenden Zeitintervall t betreffen. Die Vorhersagen können beispielsweise von einem Wetterdienst und/oder von einer sonstigen Vorhersageeinrichtung bezogen werden. Alternativ oder zusätzlich können die Vorhersagen die genannten Größen auch für einen längeren Zeitraum, beispielsweise einen halben Tag oder einen ganzen Tag, betreffen. Insgesamt kann auf diese Weise bestimmt werden, zu welchen Vergütungskonditionen, also zu welchem Preis das jeweilige Energiesubsystem 11 oder 12 welche Menge an elektrischer Energie bereitstellt oder nachfragt. Dabei werden die zweiten Einspeisedaten 7,7' insbesondere auf die ersten Einspeisedaten 6 hin angepasst. Die zweiten Einspeisedaten 7,7' werden in einem Schritt S6, S6' an die Steuerungszentrale 2 übermittelt.

Die zweiten Einspeisedaten 7,7'können auch als dynamische Angebote im Rahmen einer sogenannten "pull-optimize-push(POP)-strategy" aufgefasst werden. Auf Deutsch übersetzt bedeutet dies so viel wie "herunterladen-optimieren-hochladen Strategie". Dabei werden die ersten Einspeisedaten 6 aus der Datenbank der Steuerungszentrale 2 regelmäßig, wiederholt oder periodisch durch die Steuerungseinheiten 4 der entsprechenden Energiesubsysteme 3 abgerufen und darauf angepasste zweite Einspeisedaten 7,7' in der Datenbank gespeichert.

In einem Schritt S7 werden die zweiten Einspeisedaten 7,7' durch die Steuerungszentrale 2 empfangen. Die zweiten Einspeisedaten 7,7' können ebenfalls in der Datenbank der Steuerungszentrale 2 platziert werden.

In einem Schritt S8 steuert die Steuerungszentrale 2 den Austausch elektrischer Energie zwischen den Energiesubsysteme 3. Insbesondere steuert die Steuerungszentrale 2 den Austausch elektrischer Energie zwischen dem ersten Energiesubsystem 10 mit einem oder beiden der Energiesubsysteme 11 und 12. Beispielsweise enthalten die ersten Einspeisedaten 6 ein Angebot zur Bereitstellung einer bestimmten Energiemenge durch das erste Energiesubsysteme 10. Diesem Fall kann die Steuerungszentrale den Austausch derart steuern, dass die bestimmte Energiemenge zumindest teilweise durch die Energiesubsysteme 11 und/oder 12 entsprechend der zweiten Einspeisedaten 7,7' empfangen wird. Alternativ oder zusätzlich kann, wie oben bereits beschrieben, der Austausch elektrischer Energie zwischen der ersten Energiesubsysteme 10 und einem weiteren Energiesubsystem 3 anhand der ersten Einspeisedaten 6 des Energiesubsysteme 10 sowie anhand weiterer erster Einspeisedaten des weiteren Energiesubsystems 3 gesteuert werden. In einem anderen Beispiel enthalten die ersten Einspeisedaten 6 aus dem ersten Energiesubsystem 10 eine Nachfrage nach einer bestimmten Energiemenge.

Das Steuern gemäß Schritt S8 kann beispielsweise erfolgen, indem dem ersten Energiesubsystem 10 sowie den zweiten Energiesubsystemen 11 und/oder 12 jeweils eine zu übertragende Energiemenge 8,8',8'' zugewiesen wird. Diese zu übertragende Energiemenge 8,8',8'' kann durch die Steuerungszentrale 2 festgelegt werden. Anschließend kann die zu übertragende Energiemenge 8,8',8'' durch die Steuerungszentrale 2 an die entsprechenden Energiesubsysteme 10, 11, 12 übermittelt werden. Beispielsweise liegt die Steuerungszentrale 2 mittels der zu übertragenden Energiemenge 8,8',8'' fest, dass die zweiten Energiesubsysteme 11 und 12 die Nachfrage des ersten Energiesubsystems 10 nach der bestimmten Energiemenge jeweils zum Teil erfüllen müssen. Mit anderen Worten steuert die Steuerungszentrale 2 in diesem Beispiel, dass die zweiten Energiesubsysteme 11 und 12 jeweils eine Teilmenge der durch das erste Energiesubsystem 10 nachgefragten bestimmten Energiemenge an das erste Energiesubsysteme 10 übertragen.

Bei dem Steuern des Austauschs der elektrischen Energie im Schritt S8 kann eine Entfernung zwischen den Energiesubsystemen 10, 11, 12 berücksichtigt werden. Insbesondere wird eine entfernungsabhängige Durchleitungsvergütung durch die Steuerungszentrale 2 bestimmt. Vorteilhafterweise ist die Durchleitungsvergütung umso größer, je weiter die Energiesubsysteme 10, 11, 12 voneinander entfernt sind. Die Durchleitungsvergütung kann zusätzlich abhängig von einer Netzauslastung des Verteilnetz 5 sein. Insbesondere ist die Durchleitungsvergütung umso höher, je stärker das Verteilnetz 5 bereits ausgelastet ist. Diese Durchleitungsvergütung kann durch die Steuerungszentrale 2 beim Vergleichen der Vergütungskonditionen, die Teil der ersten 6 und zweiten Einspeisedaten 7 sind, berücksichtigt werden. Alternativ können in dem Schritt S3 die ersten Einspeisedaten 6 durch die Steuerungszentrale 2 derart modifiziert werden, dass diese die Durchleitungsvergütung enthalten. Beispielsweise werden in dem Schritt S3 die Einspeisedaten 6 um die Durchleitungsvergütung erweitert oder mit der Durchleitungsvergütung verrechnet.

Die Steuerinformationen im Rahmen der zu übertragenden Energiemenge 8,8',8'' werden in einem Schritt S9,S9',S9" durch die entsprechenden Energiesubsysteme 10, 11, 12 empfangen. Entsprechend der zu übertragenden Energiemenge 8,8',8'' können die Energiesubsysteme 10, 11, 12 anschließend eine tatsächliche Energiemenge 9,9' übertragen. Im vorliegenden Beispiel übermitteln die zweiten Energiesubsysteme 11 und 12 eine tatsächliche Energiemenge 9,9' entsprechend der zu übertragenden Energiemenge 8,8',8".

Vorliegend wird zusätzlich ein Abweichungsmaß bestimmt, welche eine Abweichung zwischen der tatsächlich übertragenen Energiemenge 9,9' und der zu übertragenden Energiemenge 8,8',8'' charakterisiert beziehungsweise quantifiziert. Kann beispielsweise die zu übertragende Energiemenge 8,8',8'' durch eines der zweiten Energiesubsysteme 11 oder 12 nicht vollständig bereitgestellt werden, so wird dies mittels des Abweichungsmaßes berücksichtigt. Zusätzlich kann anhand des Abweichungsmaßes eine Abweichungsvergütung beziehungsweise eine Vertragsstrafe durch die Steuerungszentrale 2 festgelegt werden.

Insgesamt kann durch jedes der Energiesubsysteme 3 beziehungsweise die entsprechende Steuerungseinheiten 4 im Rahmen erster Einspeisedaten 6 und/oder zweite Einspeisedaten 7 einen jeweiligen Tupel an nachgefragter beziehungsweise angeboten Energiemenge und einem Preis pro Energiemenge an die Steuerungszentrale 2 übermittelt werden. Diese Tupel können durch die Steuerungszentrale 2 in deren Datenbank hinterlegt werden. Die Steuerungszentrale 2 versucht hierbei stets die in der Datenbank hinterlegten Einspeisedaten 6, 7 beziehungsweise Tupel zu "matchen", also miteinander zu verknüpfen. In weiterer Ausgestaltung können die Einspeisedaten 6, 7 statt des Tupels einen Tripel umfassen, der zusätzlich ein jeweiliges Zeitintervall t, für welches das Angebot beziehungsweise die Nachfrage gültig ist, angibt. Ergeben sich in der Datenbank passende Einspeisedaten 6, 7, also beispielsweise ein Angebot und eine Nachfrage für eine Energiemenge in einem bestimmten Zeitintervall t, so kann die Steuerungszentrale 2 einen Energieaustausch entsprechend der passenden Einspeisedaten 6, 7 steuern.

Bei dem vorgestellten Verfahren können individuelle Netzentgelte für einzelne "Transaktionen" definiert werden. Eine Transaktion findet hierbei statt, wenn ein Energiesubsystem 3 eine bestimmte Menge elektrischer Energie an einem bestimmten Ort in einem bestimmten Zeitintervall t erzeugt und ein anderes Energiesubsysteme 3 diese Menge elektrischer Energie abzüglich der Verluste an einem anderen Ort in dem gleichen Zeitintervall t verbraucht. Die Durchleitungsvergütung (auch Netzentgelte genannt) können individuell festgelegt werden, da jedes Energiesubsystem 3 aktuelle Einspeisedaten, welche auch als Gebote ähnlich einer Auktion ausgeführt sein können, in der Datenbank einsehen kann und so individuell zugeschnittene Netzentgelte auf die Gebote addiert werden können. Die Netzentgelte können orts- und zeitabhängig sein. Hierbei kann zur Bestimmung der Netzentgelte ein Modell des Verteilnetzes 5 Berücksichtigung finden. Die Netzentgelte können entweder direkt von der Steuerungszentrale 2 oder von einem Dritten, insbesondere dem Netzbetreiber, festgelegt werden. Durch die individuellen Netzentgelte kann ein systemdienliches Verhalten angereizt werden. Beispielsweise findet in diesem Fall vornehmlich lokale Erzeugung und Verbrauch statt. Weiterhin ergeben sich hieraus folgende weitere Vorteile: Die bestehende technische Netzinfrastruktur des Verteilnetzes 5 (elektrisches Netz, Transformatoren, Schalter und weiteres) wird besser ausgelastet. Hierdurch werden andernfalls notwendige Investitionen in zusätzliche Infrastruktur vermieden. Ebenso wird die bestehende Infrastruktur nicht überlastet.

Die Gebotsabgabe der einzelnen Akteure ("Push" und "POP"-Strategy) erfolgt jeweils nach Lösen eines Optimierungsproblems (beispielsweise Optimalsteuerung oder Betriebsoptimierung). Hierbei spielen aktuelle Messwerte, die den Systemzustand kennzeichnen, als auch Prognosen eine Rolle. Für die "Push-Strategie" kann ein Referenzpreis verwendet werden um eine Betriebsoptimierung des Energiesubsystems durchzuführen. Die hierbei ermittelte Energiemenge kann nach Preisabschlag beziehungsweise Preis aufschlagen (Gewinn gegenüber dem Referenzpreis) an die Steuerungszentrale 2 übermittelt werden.

Die ausgehandelten Energiemengen müssen von jeweils jeder Steuerungseinheiten 4 für jeweils jedes Energiesubsysteme 3 bei der folgenden Betriebsoptimierung berücksichtigt werden und eine Planung zum Austausch von Energie, welche durch die Steuerungszentrale 2 aufgestellt wird, entsprechend eingehalten werden (Kommunikation der Planung z.B. an eine Regeleinheit). Bei Abweichungen, die größer als ein definierter (absoluter oder relativer) Toleranzbereich sind, werden (individualisierte) Strafzahlungen fällig.

Das vorgestellte Verfahren kann auch für "Ausfallsituationen" verwendet werden. In diesen Situationen fällt z.B. ein technisches Aggregat eines Energiesubsystems 3 (z.B. ein BHKW) für eine bestimmte Zeit aus. Oder die Vorhersage der solaren Erzeugung eines Energiesubsystems ist für einen bestimmten Tag besonders schlecht. Jede Steuerungseinheit 4 kann diesen Ausfall oder die falsche Vorhersage bei der Optimierung berücksichtigen und mittels entsprechender Einspeisedaten ein entsprechendes Gebot an die Steuerungszentrale 2 übermitteln, um sich anderweitig elektrische Energie zu beschaffen und so einen Ausfall oder eine Nichterfüllung seiner Gebote zu verhindern.

### Bezugszeichenliste

- 1: Energiesystem
- 2: Steuerungszentrale
- 3: Energiesubsystem
- 4: Steuerungseinheit
- 5: Verteilnetz
- 6: Einspeisedaten
- 7: Einspeisedaten
- 8: Energiemenge
- 9: Energiemenge
- 10: Energiesubsystem
- 11: Energiesubsystem
- 12: Energiesubsystem
- 20: Steuerungseinheit
- 21: Steuerungseinheit
- 22: Steuerungseinheit
- S1...S10: Verfahrensschritte

## Patentansprüche

1. Verfahren zum Steuern eines Austauschs von Energie in einem Energiesystem (1) mit mehreren Energiesubsystemen (3), welche jeweils für den Austausch von Energie untereinander verbunden sind, mit den Schritten:
- Empfangen erster Einspeisedaten (6) aus einem ersten (10) der Energiesubsysteme (3) durch eine Steuerungszentrale (2), wobei die ersten Einspeisedaten (6) jeweilige Vergütungskonditionen des ersten Energiesubsystems (10) zum Empfang und/oder zur Bereitstellung von Energie umfassen,
- Übermitteln der ersten Einspeisedaten (6) an ein zweites (11, 12) aus den mehreren Energiesubsystemen (3),
- Empfangen von an die ersten Einspeisedaten (6) angepassten zweiten Einspeisedaten (7) aus dem zweiten Energiesubsystem (11, 12) durch die Steuerungszentrale (2), wobei die zweiten Einspeisedaten (7) jeweilige Vergütungskonditionen des zweiten Energiesubsystems (11, 12) zum Empfang und/oder zur Bereitstellung von Energie umfassen, und die zweiten Einspeisedaten durch das zweite Energiesubsystem in Abhängigkeit von einem Systemzustand des zweiten Energiesubsystems (11, 12) bestimmt werden, wobei der Systemzustand einen Ladezustand eines Energiespeichers des zweiten Energiesubsystems (11, 12) umfasst, und
- Steuern des Austauschs von Energie zwischen dem ersten (10) und dem zweiten Energiesubsystem (11, 12) entsprechend der ersten (6) und zweiten Einspeisedaten (7) durch die Steuerungszentrale (2).

2. Verfahren nach Anspruch 1, **dadurch gekennzeichnet, dass** sich die ersten (6) und die zweiten Einspeisedaten (7) auf ein gemeinsames Zeitintervall beziehen, in welchem der Austausch der Energie erfolgen soll.

3. Verfahren nach einem der vorhergehenden Ansprüche, **dadurch gekennzeichnet, dass** die ersten Einspeisedaten (6) durch das erste Energiesubsystem (10) in Abhängigkeit von einem Systemzustand des ersten Energiesubsystems (10) bestimmt werden.

4. Verfahren nach Anspruch 3, **dadurch gekennzeichnet, dass** der jeweilige Systemzustand des ersten Energiesubsystems (10) und/oder des zweiten Energiesubsystems (11, 12) auf einer Messung und/oder einer Prognose basiert.

5. Verfahren nach Anspruch 3 oder 4, **dadurch gekennzeichnet, dass** zum Bestimmen der ersten (6) beziehungsweise zweiten Einspeisedaten (7) ein Optimierungsproblem, insbesondere im Sinne einer Optimalsteuerung oder Betriebsoptimierung, durch das erste Energiesubsystem (10) und/oder das zweite Energiesubsystem (11, 12) basierend auf dem jeweiligen Systemzustand gelöst wird.

6. Verfahren nach einem der Ansprüche 3 bis 5, **dadurch gekennzeichnet, dass** im Falle einer Abweichung zwischen einem zuvor prognostizierten Systemzustand für ein Zeitintervall und einem später festgestellten Systemzustand für dasselbe Zeitintervall die ersten (6) beziehungsweise zweiten Einspeisedaten (7) derart bestimmt werden, dass die Abweichung minimiert wird.

7. Verfahren nach einem der vorhergehenden Ansprüche, **dadurch gekennzeichnet, dass** eine Durchleitungsvergütung für ein zum Austausch der Energie genutztes Verteilnetz (5) bestimmt wird.

8. Verfahren nach Anspruch 7, **dadurch gekennzeichnet, dass** die Durchleitungsvergütung zusammen mit den ersten Einspeisedaten (6) an das zweite Energiesubsystem (11, 12) übermittelt und/oder die ersten Einspeisedaten (6) entsprechend der Durchleitungsvergütung angepasst werden.

9. Verfahren nach Anspruch 7 oder 8, **dadurch gekennzeichnet, dass** die Durchleitungsvergütung abhängig von einer Entfernung zwischen dem ersten (10) und dem zweiten Energiesubsystem (11, 12) und/oder abhängig von einer Netzauslastung des Verteilnetzes (5) bestimmt wird.

10. Verfahren nach einem der vorhergehenden Ansprüche, **dadurch gekennzeichnet, dass** bei dem Steuern des Austauschs der Energie zwischen dem ersten (10) und dem zweiten Energiesubsystem (11, 12) eine zu übertragende Energiemenge (8) bestimmt wird.

11. Verfahren nach Anspruch 10, **dadurch gekennzeichnet, dass** nachdem der Austausch elektrischer Energie erfolgt ist, eine tatsächlich übertragene Energiemenge (9) bestimmt und abhängig davon ein Abweichungsmaß bestimmt wird, welches eine Abweichung zwischen der zu übertragenden Energiemenge (8) und der tatsächlich übertragenen Energiemenge (9) charakterisiert.

12. Steuerungszentrale (2), welche als Server ausgebildet ist und dazu eingerichtet ist, ein Verfahren nach einem der vorhergehenden Ansprüche durchzuführen.

13. Energiesystem (1), mit
- mehreren Steuerungseinheiten (4) zum Steuern eines jeweiligen Energiesubsystems (3) in Bezug auf einen Austausch von Energie des Energiesubsystems (3) mit anderen Energiesubsystemen (3), und
- einer Steuerungszentrale
- zum Empfangen erster Einspeisedaten (6) aus einem ersten (10) der Energiesubsysteme (3), wobei die ersten Einspeisedaten (6) jeweilige Vergütungskonditionen des ersten Energiesubsystems (10) zum Empfang und/oder zur Bereitstellung von Energie umfassen,
- zum Übermitteln der ersten Einspeisedaten (6) an ein zweites (11, 12) aus den mehreren Energiesubsystemen (3),
- zum Empfangen von an die ersten Einspeisedaten (6) angepassten zweiten Einspeisedaten (7) aus dem zweiten Energiesubsystem (11, 12), wobei die zweiten Einspeisedaten (7) jeweilige Vergütungskonditionen des zweiten Energiesubsystems (11, 12) zum Empfang und/oder zur Bereitstellung von Energie umfassen, und die zweiten Einspeisedaten durch das zweite Energiesubsystem in Abhängigkeit von einem Systemzustand des zweiten Energiesubsystems (11, 12) bestimmt werden, wobei der Systemzustand einen Ladezustand eines Energiespeichers des zweiten Energiesubsystems (11, 12) umfasst, und
- zum Steuern des Austauschs von Energie zwischen dem ersten (10) und dem zweiten Energiesubsystem (11, 12) entsprechend der ersten (6) und zweiten Einspeisedaten (7) .

14. Computerprogramm, welches direkt in einen Speicher einer Steuerungszentrale (2) eines Energiesystems (1) ladbar ist, mit Programmcodemitteln, um die Schritte des Verfahrens zum Steuern eines Austauschs elektrischer Energie nach einem der Ansprüche 1 bis 11 auszuführen, wenn das Programm in der Steuerungszentrale (2) des Energiesystems (1) ausgeführt wird.

15. Speichermedium mit darauf gespeicherten elektronisch lesbaren Steuerinformationen, welche zumindest ein Computerprogramm nach Anspruch 14 umfassen und derart ausgestaltet sind, dass sie bei Verwendung des Speichermediums in einer Steuerungszentrale (2) eines Energiesystems (1) ein Verfahren zum Steuern eines Austauschs elektrischer Energie nach einem der Ansprüche 1 bis 11 durchführen.

## Claims

1. Method for controlling an exchange of energy in an energy system (1) having multiple energy subsystems (3) that are each connected to one another for the purpose of exchanging energy, having the steps of:
- a control centre (2) receiving first supply data (6) from a first (10) of the energy subsystems (3), the first supply data (6) comprising respective remuneration conditions of the first energy subsystem (10) for receiving and/or providing energy,
- transmitting the first supply data (6) to a second (11, 12) of the multiple energy subsystems (3),
- the control centre (2) receiving second supply data (7) adapted for the first supply data (6) from the second energy subsystem (11, 12), the second supply data (7) comprising respective remuneration conditions of the second energy subsystem (11, 12) for receiving and/or providing energy, and the second supply data being determined by the second energy subsystem on the basis of a system state of the second energy subsystem (11, 12), the system state comprising a state of charge of an energy store of the second energy subsystem (11, 12), and
- the control centre (2) controlling the exchange of energy between the first (10) and the second (11, 12) energy subsystem in accordance with the first (6) and second (7) supply data.

2. Method according to Claim 1, **characterized in that** the first (6) and the second (7) supply data relate to a common time interval in which the exchange of energy is supposed to take place.

3. Method according to either of the preceding claims, **characterized in that** the first supply data (6) are determined by the first energy subsystem (10) on the basis of a system state of the first energy subsystem (10).

4. Method according to Claim 3, **characterized in that** the respective system state of the first energy subsystem (10) and/or of the second energy subsystem (11, 12) is based on a measurement and/or a forecast.

5. Method according to Claim 3 or 4, **characterized in that** the first (6) or second (7) supply data are determined by virtue of the first energy subsystem (10) and/or the second energy subsystem (11, 12) solving an optimization problem, in particular for the purposes of optimum control or optimization of operation, on the basis of the respective system state.

6. Method according to one of Claims 3 to 5, **characterized in that** a divergence between a previously forecast system state for a time interval and a system state determined later for the same time interval results in the first (6) or second (7) supply data being determined in such a way that the divergence is minimized.

7. Method according to one of the preceding claims, **characterized in that** a grid utilization remuneration is determined for a distribution grid (5) used for exchanging energy.

8. Method according to Claim 7, **characterized in that** the grid utilization remuneration is transmitted to the second energy subsystem (11, 12) together with the first supply data (6) and/or the first supply data (6) are adapted in accordance with the grid utilization remuneration.

9. Method according to Claim 7 or 8, **characterized in that** the grid utilization remuneration is determined on the basis of a distance between the first (10) and the second (11, 12) energy subsystem and/or on the basis of a grid utilization level of the distribution grid (5).

10. Method according to one of the preceding claims, **characterized in that** an amount of energy (8) needing to be transferred is determined during control of the exchange of energy between the first (10) and the second (11, 12) energy subsystem.

11. Method according to Claim 10, **characterized in that** an amount of energy (9) actually transferred is determined after the exchange of electrical energy has taken place, and this is taken as a basis for determining a measure of divergence that characterizes a divergence between the amount of energy (8) needing to be transferred and the amount of energy (9) actually transferred.

12. Control centre (2), which is in the form of a server and is designed to carry out a method according to one of the preceding claims.

13. Energy system (1), having
- multiple control units (4) for controlling a respective energy subsystem (3) with regard to an exchange of energy of the energy subsystem (3) with other energy subsystems (3), and
- a control centre
- for receiving first supply data (6) from a first (10) of the energy subsystems (3), the first supply data (6) comprising respective remuneration conditions of the first energy subsystem (10) for receiving and/or providing energy,
- for transmitting the first supply data (6) to a second (11, 12) of the multiple energy subsystems (3),
- for receiving second supply data (7) adapted for the first supply data (6) from the second energy subsystem (11, 12), the second supply data (7) comprising respective remuneration conditions of the second energy subsystem (11, 12) for receiving and/or providing energy, and the second supply data being determined by the second energy subsystem on the basis of a system state of the second energy subsystem (11, 12), the system state comprising a state of charge of an energy store of the second energy subsystem (11, 12), and
- for controlling the exchange of energy between the first (10) and the second (11, 12) energy subsystem in accordance with the first (6) and second (7) supply data.

14. Computer program, which is loadable directly into a memory of a control centre (2) of an energy system (1), having program code means in order to carry out the steps of the method for controlling an exchange of electrical energy according to one of Claims 1 to 11 when the program is executed in the control centre (2) of the energy system (1).

15. Storage medium having electronically readable control information stored thereon that comprises at least one computer program according to Claim 14 and is configured in such a way that it carries out a method for controlling an exchange of electrical energy according to one of Claims 1 to 11 when the storage medium is used in a control centre (2) of an energy system (1).

## Revendications

1. Procédé de commande d'un échange d'énergie dans un système (1) énergétique ayant plusieurs sous-systèmes (3) énergétiques, qui sont raccordés entre eux respectivement pour l'échange d'énergie comprenant les stades :
- réception de premières données (6) d'alimentation d'un premier (10) des sous-systèmes (3) énergétiques par une centrale (2) de commande, dans lequel les premières données (6) d'alimentation comprennent des conditions respectives d'amélioration du premier sous-système (10) énergétique pour la réception et/ou la mise à disposition d'énergie,
- transmission des premières données (6) d'alimentation à un deuxième (11, 12) parmi les plusieurs sous-systèmes (3) énergétiques,
- réception de deuxièmes données (7) d'alimentation adaptées aux premières données (6) d'alimentation à partir du deuxième sous-système (11, 12) énergétique par la centrale (2) de commande, dans lequel les deuxièmes données (7) d'alimentation comprennent des conditions respectives d'amélioration du deuxième sous-système (11, 12) énergétique pour la réception et/ou pour la mise à disposition de l'énergie, et on détermine les deuxièmes données d'alimentation par le deuxième sous-système énergétique en fonction d'un état de système du deuxième sous-système (11, 12) énergétique, dans lequel l'état de système comprend un état de charge d'un accumulateur d'énergie du deuxième sous-système (11, 12) énergétique, et
- commande de l'échange d'énergie entre le premier (10) et le deuxième sous-système (11, 12) énergétique conformément aux premières (6) et deuxièmes données (7) d'alimentation par la centrale (2) de commande.

2. Procédé suivant la revendication 1, **caractérisé en ce que** les premières (6) et les deuxièmes données (7) d'alimentation se rapportent à un même intervalle de temps, dans lequel l'échange d'énergie doit avoir lieu.

3. Procédé suivant l'une des revendications précédentes, **caractérisé en ce que** l'on détermine les premières données (6) d'alimentation par le premier sous-système (10) énergétique en fonction d'un état de système du premier sous-système (10) énergétique.

4. Procédé suivant la revendication 3, **caractérisé en ce que** l'état de système respectif du premier sous-système (10) énergétique et/ou du deuxième sous-système (11, 12) énergétique repose sur une mesure et/ou sur un pronostic.

5. Procédé suivant la revendication 3 ou 4, **caractérisé en ce que**, pour la détermination des premières (6) et respectivement des deuxièmes données (7) d'alimentation, on résout un problème d'optimisation, en particulier dans le sens d'une commande optimum ou d'une optimisation de fonctionnement par le premier sous-système (10) énergétique et/ou le deuxième sous-système (11, 12) énergétique sur la base de l'état respectif de système.

6. Procédé suivant l'une des revendications 3 à 5, **caractérisé en ce que**, dans le cas d'un écart entre un état de système pronostiqué auparavant pendant un intervalle de temps et un état de système constaté ultérieurement pour le même intervalle de temps, on détermine les premières (6) et respectivement les deuxièmes données (7) d'alimentation, de manière à minimiser l'écart.

7. Procédé suivant l'une des revendications précédentes, **caractérisé en ce que** l'on détermine une amélioration transitoire pour un réseau (5) de distribution utilisé pour l'échange d'énergie.

8. Procédé suivant la revendication 7, **caractérisé en ce que** l'on transmet l'amélioration transitoire ensemble avec les premières données (6) d'alimentation au deuxième sous-système (11, 12) énergétique et/ou on adapte les premières données (6) d'alimentation conformément à l'amélioration transitoire.

9. Procédé suivant la revendication 7 ou 8, **caractérisé en ce que** l'on détermine l'amélioration transitoire en fonction d'un éloignement entre le premier (10) et le deuxième sous-système (11, 12) énergétique et/ou en fonction d'une charge du réseau (5) distributeur.

10. Procédé suivant l'une des revendications précédentes, **caractérisé en ce que**, lors de la commande de l'échange de l'énergie entre le premier (10) et le deuxième sous-systèmes (11, 12) énergétiques, on détermine une quantité (8) d'énergie à transférer.

11. Procédé suivant la revendication 10, **caractérisé en ce que**, après que l'échange d'énergie électrique est effectué, on détermine une quantité (9) d'énergie transférée réellement et en fonction de cela, on détermine une mesure d'écart, qui caractérise un écart entre la quantité (8) d'énergie à transférer et la quantité (9) d'énergie transférée réellement.

12. Centrale (2) de commande, qui est constituée en serveur et qui est agencée pour exécuter un procédé suivant l'une des revendications précédentes.

13. Système (1) d'énergie, comprenant
- plusieurs unités (4) de commande pour la commande d'un sous-système (3) énergétique respectif en ce qui concerne un échange d'énergie du sous-système (3) énergétique avec d'autres sous-systèmes (3) énergétiques, et
- une centrale de commande
- pour la réception de premières données (6) d'alimentation d'un premier (10) des sous-systèmes (3) énergétiques, dans lequel les premières données (6) d'alimentation comprennent des conditions respectives d'amélioration du premier sous-système (10) énergétique pour la réception et/ou la mise à disposition d'énergie,
- pour la transmission des premières données (6) d'alimentation à un deuxième (11, 12) parmi les plusieurs sous-systèmes (3) énergétiques,
- pour la réception de deuxièmes données (7) d'alimentation adaptées aux premières données (6) d'alimentation à partir du deuxième sous-système (11, 12) énergétique, dans lequel les deuxièmes données (7) d'alimentation comprennent des conditions respectives d'amélioration du deuxième sous-système (11, 12) énergétique pour la réception et la mise à disposition d'énergie et/ou les deuxièmes données d'alimentation sont déterminées par le deuxième sous-système énergétique en fonction d'un état de système du deuxième sous-système (11, 12) énergétique, dans lequel l'état de système comprend un état de charge de l'accumulateur d'énergie du deuxième sous-système (11, 12) énergétique, et
- pour la commande de l'échange d'énergie entre le premier (10) et le deuxième sous-système (11, 12) énergétique conformément aux premières (6) et aux deuxièmes données (7) d'alimentation.

14. Programme d'ordinateur, qui peut être chargé directement dans une mémoire d'une centrale (2) de commande d'un système (1) énergétique, comprenant des moyens de code de programme, pour exécuter les stades du procédé de commande d'un échange d'énergie électrique suivant l'une des revendications 1 à 11, lorsque le programme est exécuté dans la centrale (2) de commande du système (1) énergétique.

15. Support de mémoire, sur lequel sont mises en mémoire des informations de commande déchiffrables électroniquement, lesquelles comprennent au moins un programme d'ordinateur suivant la revendication 14 et sont conformées, de manière à ce qu'elles exécutent, lors de l'utilisation du support de mémoire dans une centrale (2) de commande d'un système (1) énergétique, un procédé de commande d'un échange d'énergie électrique suivant l'une des revendications 1 à 11.
